# EUROPEAN PATENT APPLICATION

(11) **EP 4 213 244 A1**
(43) Date of publication of application: **19.07.2023**
(21) Application number: 22803159.7
(22) Date of filing: 18.04.2022
(51) Int. Cl.: H01M 4/36

(54) **SODIUM ION POSITIVE ELECTRODE MATERIAL AND PREPARATION METHOD THEREFOR, AND SODIUM ION BATTERY**

(30) Priority: 29.11.2021 CN 202111439265
(71) Applicant: Hengdian Group DMEGC Magnetics Co., Ltd., Dongyang, Zhejiang 322118 (CN)
(72) Inventor: ZHANG, Haoyang, Dongyang, Zhejiang 322118 (CN); JIANG, Yisheng, Dongyang, Zhejiang 322118 (CN); WANG, Zhanzhou, Dongyang, Zhejiang 322118 (CN)
(74) Representative: DehnsGermany Partnerschaft von Patentanwälten
(86) International application number: PCT/CN2022/087447
(87) International publication number: WO 2023/092930

(57) **Abstract**

The present disclosure provides a sodium ion cathode electrode material, a preparation method thereof, and a sodium ion battery. The sodium ion cathode electrode material includes a manganese-based cathode electrode material and a coating layer coated on the manganese-based cathode electrode material. A general chemical formula of the manganese-based cathode electrode material is NaₓMn_{y}M_{1-y}O₂, herein M is selected from any one of Cu, Fe, Co, and Ni, and 0.5≤x≤1, 0.5≤y≤1, the coating layer is a lithium-containing ternary material, and a general chemical formula of the lithium-containing ternary material is LiNiₐCo_{b}Mn_{c}O₂, 0<a<1, 0<b<1, 0<c<1, and a+b+c=1. In the present application, a lithium source containing the lithium ternary material is used as a sacrificial agent to generate a part of a solid electrolyte interface (SEI), thereby the loss of an active sodium source in the manganese-based cathode electrode material is reduced, and the electrical properties, such as the reversible capacity and the cycle performance, of the sodium ion cathode electrode material are improved.

## Description

### Technical Field

The present disclosure relates to the technical field of sodium ion batteries, in particular to a sodium ion cathode electrode material, a preparation method thereof, and a sodium ion battery.

### Background

Lithium ion batteries are widely used in the field of energy storage due to its high energy density and long cycle life. However, lithium resources in the earth crust are relatively low in abundance and unevenly distributed. With the larger and larger quantity demanded for batteries in the field of energy storage, the cost of the lithium ion batteries is continuously raised. A sodium element has the similar physical and chemical properties to a lithium element, and is rich in sodium resources and low in price. Sodium ion batteries are also similar in principle to the lithium-ion batteries, and the sodium ion batteries are considered to be a new generation of a high-performance and low-cost secondary battery technology.

A manganese-based stratified material has the advantages of simple preparation, environmental friendliness, and large specific capacity and the like, and attracts an extensive attention. At the same time, the manganese-based cathode electrode material is easily corroded by an electrolyte during the charging and discharging process, so that the material structure is changed, and its cycle performance is seriously affected. In addition, the energy density of the sodium ion battery is not as good as that of the lithium ion battery at present. In the case of using hard carbon as a anode electrode, a solid electrolyte interface (SEI) formed in the formation process may consume a large number of sodium sources, the active sodium source is further reduced, the energy density is reduced, and a further application of the manganese-based material is limited.

In terms of improving the consumption of the sodium source by SEI formed, there are two ways of cathode electrode sodium supplementation and anode electrode sodium supplementation. Usually, the anode electrode pre-sodiumization is used to improve the consumption of the sodium source, and the pre-sodiumization refers to introduction of exogenous sodium into a battery system in appropriate mode and form. The anode electrode pre-sodiumization is divided into direct addition of exogenous sodium, active additive pre-sodiumization, electrochemical pre-sodiumization and chemical pre-sodiumization according to a pre-sodiumization mode. The above methods all involve further treatment of a coated anode electrode piece, and even need to directly use metal sodium to pre-sodiumize it, the requirements for workshop environments and devices are relatively high, and the required time is relatively long, which is not beneficial to commercialization applications. The cathode electrode sodium supplementation, such as covering an inactive substance to isolate the erosion of the manganese-based stratified material and the electrolyte, improves the cycle performance of the material, but at the same time affects its energy density.

### Summary

A main purpose of the present disclosure is to provide a sodium ion cathode electrode material, a preparation method thereof, and a sodium ion battery, as to solve problems in an existing technology that a sodium ion cathode electrode material is relatively low in its capacity and relatively poor in cycle performance due to the first cycle of sodium source consumption.

In order to achieve the above purpose, according to one aspect of the present disclosure, a sodium ion cathode electrode material is provided, the sodium ion cathode electrode material includes a manganese-based cathode electrode material and a coating layer coated on the manganese-based cathode electrode material, a general chemical formula of the manganese-based cathode electrode material is NaₓMn_{y}M_{1-y}O₂, herein M is selected from any one of Cu, Fe, Co, and Ni, and 0.5≤x≤1, 0.5≤y≤1, the coating layer is a lithium-containing ternary material, and a general chemical formula of the lithium-containing ternary material is LiNiₐCo_{b}Mn_{c}O₂, 0<a<1, 0<b<1, 0<c<1, and a+b+c=1.

Further, the above coating layer is 5∼20wt% of the manganese-based cathode electrode material, preferably 10∼20wt%, and further preferably 12∼17wt%.

Further, the particle diameter of the above sodium ion cathode electrode material is 0.2-1 µm.

According to another aspect of the present disclosure, a preparation method for the above sodium ion cathode electrode material is provided, and the preparation method includes: Step S1, mixing and heating raw materials including a manganese-based cathode electrode material, a lithium source, a nickel source, a cobalt source, a manganese source and a complexing agent, to obtain a gel; and Step S2, in an oxygen-containing atmosphere, sintering the gel, to obtain the sodium ion cathode electrode material.

Further, the above Step S1 includes: Step S11, mixing the raw materials, to obtain mixed solution; Step S12, adjusting a pH value of the mixed solution, to obtain a sol; and Step S13, heating the sol, to obtain the gel; preferably, the pH value is 7-8, the temperature of the heating is preferably 70~90°C, and a mode of the heating is preferably water bath heating, preferably, the mixing process includes: performing first mixing on the manganese-based cathode electrode material, the lithium source, the nickel source, the cobalt source, the manganese source and water, to form first solution; performing second mixing on the complexing agent and water, to form second solution; dropwise adding the second solution to the first solution, to obtain the mixed solution; and preferably, the pH value of the mixed solution is adjusted by ammonia water, preferably the stirring rotation speed of the first mixing is 400-600 r/min, preferably the stirring time of the first mixing is 3-5 h, preferably the stirring rotation speed of the second mixing is 300-500 r/min, and preferably the stirring time of the second mixing is 1-2 h.

Further, in the above manganese-based cathode electrode material, the nickel source, the cobalt source, and the manganese source, respectively calculated by a transition metal ion contained in each compound, and in the lithium source, calculated by a lithium ion, the molar ratio of the manganese-based cathode electrode material, the lithium source, the nickel source, the cobalt source, and the manganese source is 23-28:1.6-6.4:0.5-2:0.5-2:0.5-2, preferably 23-28:3.2-6.4:1-2:1-2:1-2, and more preferably 23-28:3.84-5.44:1.2-1.7:1.2-1.7:1.2-1.7; preferably the lithium source is a lithium carbonate and/or a lithium hydroxide, preferably the nickel source is selected from any one or more of a nickel acetate, a nickel sulfate, and a nickel chloride, preferably the cobalt source is selected from any one or more of a cobalt acetate, a cobalt sulfate, and a cobalt chloride, and preferably the manganese source is selected from any one or more of a manganese acetate, a manganese sulfate, and a manganese chloride.

Further, calculated by the transition metal ion contained in each component, the total mole number of the nickel source, the cobalt source, and the manganese source is n, the ratio of the mole number of the complexing agent to the n is 1-1.1:1, and preferably the complexing agent is selected from any one or more of a citric acid, a glycolic acid, and an acetic acid.

Further, the temperature of the above sintering is 800∼1000°C, preferably the time of the sintering is 10-14 h, and preferably the heating rate of the sintering is 5~10°C/min.

Further, before the above sintering, the gel is dried, and the temperature of the drying is 400~450°C, preferably the time of the drying is 4-7 h.

According to yet another aspect of the present disclosure, a sodium ion battery is provided, including a cathode electrode and an anode electrode, and the cathode electrode includes a cathode electrode material, the cathode electrode material is the above sodium ion cathode electrode material.

A technical scheme of the present disclosure is applied, the present disclosure aims at a problem that the manganese-based cathode electrode material is easily eroded by the electrolyte and a problem of the consumption of the sodium source in the process of forming SEI, the lithium-containing ternary material with the larger capacity is used as the coating layer to coat the sodium ion cathode electrode material. On the one hand, the erosion of the electrolyte to the manganese-based cathode electrode material is reduced by the coating layer, and on the other hand, in the formation process, the lithium source of the lithium-containing ternary material is used as the sacrificial agent to generate a part of SEI, thereby the loss of the active sodium source in the manganese-based cathode electrode material is reduced, and the electrical properties, such as the reversible capacity and the cycle performance, of the sodium ion cathode electrode material are improved.

### Brief Description of the Drawings

Drawings of the description constituting a part of the present application are used to provide further understanding of the present disclosure, and exemplary embodiments of the present disclosure and descriptions thereof are used to explain the present disclosure, and do not constitute improper limitation to the present disclosure. In the drawings:

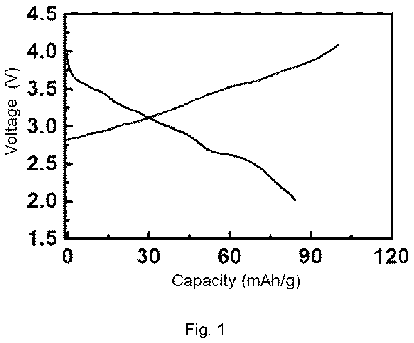

Fig. 1 shows a schematic diagram of a first cycle charge-discharge curve of a cylindrical sodium ion battery of Embodiment 1 at 2∼4.1 V.

### Detailed Description of the Embodiments

It should be noted that embodiments in the present application and features of the embodiments may be combined with each other in the case without conflicting. The present disclosure is described in detail below with reference to the drawings and in combination with the embodiments.

As analyzed in the background, in the existing technology, there is a problem that the first cycle of sodium source consumption of the sodium ion cathode electrode material leads to the relatively low capacity and relatively poor cycle performance. In order to solve this problem, the present disclosure provides a sodium ion cathode electrode material, a preparation method thereof, and a sodium ion battery.

In a typical embodiment of the present application, a sodium ion cathode electrode material is provided, the sodium ion cathode electrode material includes a manganese-based cathode electrode material and a coating layer coated on the manganese-based cathode electrode material, a general chemical formula of the manganese-based cathode electrode material is NaₓMn_{y}M_{1-y}O₂, herein M is selected from any one of Cu, Fe, Co, and Ni, and 0.5≤x≤1, 0.5≤y≤1, the coating layer is a lithium-containing ternary material, and a general chemical formula of the lithium-containing ternary material is LiNiₐCo_{b}Mn_{c}O₂, 0<a<1, 0<b<1, 0<c<1, and a+b+c=1.

The present disclosure aims at a problem that the manganese-based cathode electrode material is easily eroded by the electrolyte and a problem of the consumption of the sodium source in the process of forming SEI, the lithium-containing ternary material with the larger capacity is used as the coating layer to coat the sodium ion cathode electrode material. On the one hand, the erosion of the electrolyte to the manganese-based cathode electrode material is reduced by the coating layer, and on the other hand, in the formation process, the lithium source of the lithium-containing ternary material is used as the sacrificial agent to generate a part of SEI, thereby the loss of the active sodium source in the manganese-based cathode electrode material is reduced, and the electrical properties, such as the reversible capacity and the cycle performance, of the sodium ion cathode electrode material are improved.

In order to further improve the protective effect of the coating layer on the manganese-based cathode electrode material and reduce the loss of the active sodium source, the above coating layer is 5∼20wt% of the manganese-based cathode electrode material, preferably 10∼20wt%, and further preferably 12∼17wt%.

Preferably, the particle diameter of the above sodium ion cathode electrode material is 0.2-1 µm, which is more suitable for the use requirements of existing cathode electrode materials.

In another typical embodiment of the present application, a preparation method for the above sodium ion cathode electrode material is provided, and the preparation method includes: Step S1, mixing and heating raw materials including a manganese-based cathode electrode material, a lithium source, a nickel source, a cobalt source, a manganese source and a complexing agent, to obtain a gel; and Step S2, in an oxygen-containing atmosphere, sintering the gel, to obtain the sodium ion cathode electrode material.

In the Step S1 of the present application, after the raw materials are mixed, low-viscosity solution is firstly formed in a solvent, as to obtain the uniform sol at a molecular level in a short time. After heating, the uniformly mixed gel at the molecular level is further formed. The sol-gel method is mild in preparation conditions, each component is easy to control, the reaction time is shorter, the temperature is controllable, and the particle diameter of particles obtained is smaller and uniform. After the gel is sintered, the sodium ion cathode electrode material with uniform coating and uniform particles is obtained.

In order to improve the efficiency of forming the gel from the sol, preferably the above Step S1 includes: Step S11, mixing the raw materials, to obtain mixed solution; Step S12, adjusting a pH value of the mixed solution, to obtain a sol; and Step S13, heating the sol, to obtain the gel; preferably, the pH value is 7~8, the temperature of the heating is preferably 70~90°C, and a mode of the heating is preferably water bath heating, preferably, the mixing process includes: performing first mixing on the manganese-based cathode electrode material, the lithium source, the nickel source, the cobalt source, the manganese source and water, to form first solution; performing second mixing on the complexing agent and water, to form second solution; dropwise adding the second solution to the first solution, to obtain the mixed solution; and preferably, the pH value of the mixed solution is adjusted by ammonia water, preferably the stirring rotation speed of the first mixing is 400-600 r/min, preferably the stirring time of the first mixing is 3-5 h, preferably the stirring rotation speed of the second mixing is 300-500 r/min, and preferably the stirring time of the second mixing is 1-2 h.

The first mixing is performed on the manganese-based cathode electrode material, the lithium source, the nickel source, the cobalt source, the manganese source and the water, to obtain the uniform first solution; the second mixing is performed on the complexing agent and the water, to form the uniform second solution; the second solution is dropwise added to the first solution, to obtain the uniform mixed solution, the preferred above stirring rotation speed and time are beneficial to obtain the uniform low-viscosity first solution and second solution, and a mode of dropwise adding the second solution to the first solution is helpful to prevent the viscosity of the mixed solution from suddenly becoming too large, thereby it is beneficial to form the uniformly mixed gel sol at the molecular level. After the water is heated and evaporated, the uniformly mixed gel at the molecular level is further formed, and after the gel is sintered, the sodium ion cathode electrode material with the uniform coating and uniform particles is obtained. The sol-gel method is mild in preparation conditions, each component is easy to control, the reaction time is shorter, the temperature is controllable, and the particle diameter of particles obtained is smaller and uniform.

In an embodiment of the present application, in the manganese-based cathode electrode material, the nickel source, the cobalt source, and the manganese source, respectively calculated by a transition metal ion contained in each compound, and in the lithium source, calculated by a lithium ion, the molar ratio of the above manganese-based cathode electrode material, the lithium source, the nickel source, the cobalt source, and the manganese source is 23-28:1.6-6.4:0.5-2:0.5-2:0.5-2, preferably 23-28:3.2-6.4:1-2:1-2:1-2, and more preferably 23-28:3.84-5.44:1.2-1.7:1.2-1.7:1.2-1.7; preferably the lithium source is a lithium carbonate and/or a lithium hydroxide, preferably the nickel source is selected from any one or more of a nickel acetate, a nickel sulfate, and a nickel chloride, preferably the cobalt source is selected from any one or more of a cobalt acetate, a cobalt sulfate, and a cobalt chloride, and preferably the manganese source is selected from any one or more of a manganese acetate, a manganese sulfate, and a manganese chloride.

The raw materials in the above ratios and the types thereof are beneficial to the uniformity of dispersion in the solvent, and the manganese-based cathode electrode material NaₓMn_{y}M_{1-y}O₂ with the excellent performance and the lithium-containing ternary material LiNiₐCo_{b}Mn_{c}O₂ coating layer coated on the manganese-based cathode electrode material are obtained. The amount of the lithium-containing ternary material LiNiₐCo_{b}Mn_{c}O₂ coating layer is changed with the molar ratio of the lithium source, the nickel source, the cobalt source and the manganese source, and the preferred molar ratio of the above manganese-based cathode electrode material, the lithium source, the nickel source, the cobalt source, and the manganese source is more helpful to form the LiNiₐCo_{b}Mn_{c}O₂ coating layer that coats NaₓMn_{y}M_{1-y}O₂ well, herein in the process of sintering the gel, the lithium source is volatilized so as to cause a small loss, thus the slightly excessive lithium source is added.

In order to improve the complexing effect between the complexing agent and the metal ions in the raw materials, calculated by the transition metal ion contained in each component, the total mole number of the nickel source, the cobalt source, and the manganese source is n, the ratio of the mole number of the complexing agent to the n is 1-1.1:1, and preferably the complexing agent is selected from any one or more of a citric acid, a glycolic acid, and an acetic acid, herein the complexing agent is slightly excessively added, although it may not lead to the reduction of the electrical performance of the sodium ion cathode electrode material, it may be wasted, so that the cost is increased.

In order to take into account the efficiency of sintering and the uniformity of the coating layer as much as possible, the temperature of the above sintering is preferably 800∼1000°C, the time of the sintering is preferably 10-14 h, and the heating rate of the sintering is preferably 5~10°C/min.

In an embodiment of the present application, before the above sintering, the gel is dried, the temperature of the drying is 400~450°C, and the time of the drying is preferably 4-7 h.

Drying the gel before the sintering is beneficial to eliminate the interference effect of the water in the gel on the sintering process.

In another typical embodiment of the present application, a sodium ion battery is provided, including a cathode electrode and an anode electrode, the cathode electrode includes a cathode electrode material, and the cathode electrode material is the above sodium ion cathode electrode material.

The sodium ion battery including the sodium ion cathode electrode material of the present application has the higher reversible capacity and the longer service life.

Herein, the sodium ion battery mainly includes: the cathode electrode, the anode electrode, a diaphragm, an electrolyte, and housing.

In order to further improve the performance of the sodium ion battery, a preferred preparation method for the cathode electrode comprises:
adding a binder (polyvinylidene fluoride, sodium alginate and the like) to N-methylpyrrolidone, to obtain glue solution with a concentration of 6%; and
adding the sodium ion cathode electrode material prepared above by the present application and a conductive agent (any one or more of graphite, carbon black, acetylene black, and graphene) to the glue solution, and stirring uniformly, to obtain a slurry material with a viscosity of 4500∼6500mPas.s, coating an aluminum foil with the slurry material, removing the solvent at a high temperature, and rolling and slitting, to obtain the cathode electrode, herein the mass ratio of the above sodium ion cathode electrode material, the conductive agent and the binder is 97:2:1.

A preferred preparation method for the anode electrode includes:
adding hard carbon, a thickener carboxymethyl cellulose (CMC), and a binder styrene butadiene rubber (SBR) to deionized water in proportion, to obtain a slurry material and coating a copper foil, removing the solvent at a high temperature, and rolling and slitting, to obtain the anode electrode, herein the mass ratio of hard carbon: CMC : SBR is 97:1.5:1.5.

A sodium salt in the electrolyte is any one or more of NaClO₄, NaPF₆, NaTFSI, and an organic solvent in the electrolyte is any one or more of an ethylene carbonate, a propylene carbonate, a dimethyl carbonate, and a diethyl carbonate.

The beneficial effects of the present application are described below in combination with specific embodiments and contrast examples.

### Embodiment 1

Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) are dissolved in water for first mixing according to the molar ratio of 26:4.48:1.4:1.4:1.4, first solution is formed, a citric acid (the molar ratio of Na_{0.67}MnO₂ to the citric acid is 26:4.2) is added to water for second mixing, second solution is formed, and the second solution is dropwise added to the first solution, to obtain mixed solution. Herein, the stirring rotation speed of the first mixing is 600 r/min, the stirring time of the first mixing is 3 h, the stirring rotation speed of the second mixing is 500 r/min, and the stirring time of the second mixing is 1 h. A pH value of the mixed solution is adjusted between 7 and 8 with ammonia water, to obtain a sol. The sol is heated to 80°C with a water bath, and water is removed, to obtain a gel. The gel is dried at 450°C for 5 hours. Then the gel is sintered at 900°C (the heating rate is 5~10°C/min) for 12 hours, to obtain a sodium ion cathode electrode material with a LiNiₐCo_{b}Mn_{c}O₂ coating amount of 14wt%, a first cycle charge-discharge curve thereof at 2∼4.1 V is shown in Fig. 1, its charge specific capacity is 103 mAh/g, and the discharge capacity is 84.5 mAh/g.

### Embodiment 2

A difference between Embodiment 2 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 26:3.84:1.2:1.2:1.2, the molar ratio of Na_{0.67}MnO₂ to a citric acid is 26:3.6, and finally a sodium ion cathode electrode material with a coating amount of 12wt% is obtained.

### Embodiment 3

A difference between Embodiment 3 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 26:5.44:1.7:1.7:1.7, the molar ratio of Na_{0.67}MnO₂ to a citric acid is 26:5.1, and finally a sodium ion cathode electrode material with a coating amount of 17wt% is obtained.

### Embodiment 4

A difference between Embodiment 4 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 26:3.2:1:1:1, the molar ratio of Na_{0.67}MnO₂ to a citric acid is 26:3, and finally a sodium ion cathode electrode material with a coating amount of 10wt% is obtained.

### Embodiment 5

A difference between Embodiment 5 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 26:6.4:2:2:2, the molar ratio of Na_{0.67}MnO₂ to a citric acid is 26:6, and finally a sodium ion cathode electrode material with a coating amount of 20% is obtained.

### Embodiment 6

A difference between Embodiment 2 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 26:1.6:0.5:0.5:0.5, the molar ratio of Na_{0.67}MnO₂ to a citric acid is 26:1.5, and finally a sodium ion cathode electrode material with a coating amount of 5% is obtained. A first cycle charge-discharge curve thereof at 2∼4.1 V shows: its charge specific capacity is 89.3 mAh/g and the discharge capacity is 71.2 mAh/g.

### Embodiment 7

A difference between Embodiment 7 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 26:4.48:1.4:1.4:1.4, and finally a sodium ion cathode electrode material with a coating amount of 14% is obtained.

### Embodiment 8

A difference between Embodiment 8 and Embodiment 1 is that:
a complexing agent is a glycolic acid, and finally a sodium ion cathode electrode material with a coating amount of 14wt% is obtained.

### Embodiment 9

A difference between Embodiment 9 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 23:4.48:1.4:1.4:1.4, the molar ratio of Na_{0.67}MnO₂ to a citric acid is 26:4.62, and finally a sodium ion cathode electrode material with a coating amount of 14% is obtained.

### Embodiment 10

A difference between Embodiment 10 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 28:4.48:1.4:1.4:1.4, the molar ratio of Na_{0.67}MnO₂ to a citric acid is 26:3.78, and finally a sodium ion cathode electrode material with a coating amount of 14% is obtained.

### Embodiment 11

A difference between Embodiment 11 and Embodiment 1 is that:
the molar ratio of Na_{0.67}MnO₂, a lithium carbonate, a nickel acetate, a cobalt acetate, and a manganese acetate (in Na_{0.67}MnO₂, the nickel acetate, the cobalt acetate, and the manganese acetate, calculated by a transition metal ion contained in each component, and in the lithium carbonate, calculated by a lithium ion) is 30:4.48:1.4:1.4:1.4, the molar ratio of Na_{0.67}MnO₂ to a citric acid is 26:6.3, and finally a sodium ion cathode electrode material with a coating amount of 14% is obtained.

### Embodiment 12

A difference between Embodiment 12 and Embodiment 1 is that:
The sol is heated to 70°C with a water bath, water is removed, to obtain a gel, and finally a sodium ion cathode electrode material with a coating amount of 14wt% is obtained.

### Embodiment 13

A difference between Embodiment 13 and Embodiment 1 is that:
The sol is heated to 90°C with a water bath, water is removed, to obtain a gel, and finally a sodium ion cathode electrode material with a coating amount of 14wt% is obtained.

### Embodiment 14

The difference between Embodiment 14 and Embodiment 1 is that:
The sol is heated to 60°C with a water bath, water is removed, to obtain a gel, and finally a sodium ion cathode electrode material with a coating amount of 14% is obtained.

### Embodiment 15

A difference between Embodiment 15 and Embodiment 1 is that:
The pH value of mixed solution is adjusted between 8 and 9 with ammonia water, to obtain a sol, and finally a sodium ion cathode electrode material with a coating amount of 14% is obtained.

### Embodiment 16

A difference between Embodiment 16 and Embodiment 1 is that:
The gel is dried at 400°C for 7 hours, and finally a sodium ion cathode electrode material with a coating amount of 14% is obtained.

### Embodiment 17

A difference between Embodiment 17 and Embodiment 1 is that:
The gel is sintered at 1000°C for 10 hours, and finally a sodium ion cathode electrode material with a coating amount of 14% is obtained.

### Embodiment 18

A difference between Embodiment 18 and Embodiment 1 is that:
A gel is sintered at 800°C for 14 hours, and finally a sodium ion cathode electrode material with a coating amount of 14% is obtained.

### Embodiment 19

A difference between Embodiment 19 and Embodiment 1 is that:
a gel is sintered at 750°C for 12 hours, and finally a sodium ion cathode electrode material with a coating amount of 14% is obtained.

### Embodiment 20

A difference between Embodiment 20 and Embodiment 1 is that:
The manganese-based cathode electrode material is Na_{0.67}Mn_{0.67}Ni_{0.33}O₂, and finally a sodium ion cathode electrode material with a coating amount of 14% is obtained.

### Embodiment 21

A difference between Embodiment 21 and Embodiment 1 is that:
The stirring rotation speed of first mixing is 400 r/min, the stirring time of the first mixing is 5 h, and finally a sodium ion cathode electrode material with a coating amount of 14% is obtained.

### Embodiment 22

A difference between Embodiment 22 and Embodiment 1 is that:
The stirring rotation speed of first mixing is 350 r/min, the stirring time of the first mixing is 3 h, and finally a sodium ion cathode electrode material with a coating amount of 14% is obtained.

### Embodiment 23

A difference between Embodiment 23 and Embodiment 1 is that:
The stirring rotation speed of first mixing is 300 r/min, the stirring time of the first mixing is 2 h, and finally a sodium ion cathode electrode material with a coating amount of 14% is obtained.

### Embodiment 24

A difference between Embodiment 24 and Embodiment 1 is that:
The stirring rotation speed of first mixing is 250 r/min, the stirring time of the first mixing is 1 h, and finally a sodium ion cathode electrode material with a coating amount of 14% is obtained.

### Embodiment 25

A difference between Embodiment 25 and Embodiment 1 is that:
The second solution is directly mixed with first solution, to obtain mixed solution, and finally a sodium ion cathode electrode material with a coating amount of 14% is obtained.

### Contrast example 1

A difference between Contrast example 1 and Embodiment 1 is that:
The manganese-based cathode electrode material is Na_{0.67}MnO₂ which is directly used as a sodium ion cathode electrode material.

### Contrast example 2

A difference between Contrast example 2 and Embodiment 20 is that:
The manganese-based cathode electrode material is Na_{0.67}Mn_{0.67}Ni_{0.33}O₂ which is directly used as a sodium ion cathode electrode material.

The first cycle charge-discharge curve of the cylindrical sodium ion battery of Contrast example 1 at 2∼4.1 V shows: its charge specific capacity is 85 mAh/g, the discharge capacity is 67 mAh/g, and the irreversible capacity is 18 mAh/g. From the charge specific capacity of Na_{0.67}MnO₂ of Contrast example 1 of 85 mAh/g to the charge specific capacity of the sodium ion cathode electrode material of Embodiment 1 of 103 mAh/g, it may be seen that the improved coating performance of the manganese-based cathode electrode material of the present application may better make up for the first cycle of the irreversible capacity loss.

A chemical formula of the coating layer of the sodium ion cathode electrode material obtained in the above Embodiments 1 to 25 is LiNi_{1/3}Co_{1/3}Mn_{1/3}O₂, and the particle diameter of the sodium ion cathode electrode material is basically in the range of 0.2-1 µm.

According to the ratio of sodium ion cathode electrode material: Super P: polyvinylidene fluoride (PVDF)=97:2:1, N-methylpyrrolidone is added, herein the solid content is 65%, and a cathode electrode slurry material is obtained by stirring evenly, the cathode electrode slurry material is coated on an aluminum foil with a thickness of 15 µm, and it is dried to obtain a cathode electrode.

According to the ratio of hard carbon: Super P:PVDF=94:3:3, N-methylpyrrolidone is added, herein the solid content is 52%, a anode electrode slurry material is obtained by stirring evenly, the anode electrode slurry material is coated on a copper foil with a thickness of 8 µm, and it is dried to obtain a anode electrode.

Assembly of battery: the cathode electrode, the anode electrode, and a diaphragm are wound together, and an electrolyte (a sodium salt is NaClO₄, and an organic solvent in the electrolyte is that the volume ratio of an ethylene carbonate, a propylene carbonate, and a dimethyl carbonate is 1:1:1) is injected to obtain the cylindrical sodium ion battery.

Under a condition of 0.5C, the cylindrical sodium ion batteries of Embodiments 1 to 25, Contrast example 1, and Contrast example 2 are respectively tested for the first discharge capacity, the residual capacity after 100 cycles, and the capacity retention rate after 100 cycles, as shown in Table 1.

**Table 1**

| Embodiment/Contrast example | First discharge capacity (mAh/g) | Residual capacity after 100 cycles (mAh/g) | Capacity retention rate after 100 cycles (%) |
|---|---|---|---|
| Embodiment 1 | 84.5 | 79.00 | 93.5 |
| Embodiment 2 | 83.2 | 76.63 | 92.1 |
| Embodiment 3 | 86.1 | 78.78 | 91.5 |
| Embodiment 4 | 82.8 | 73.20 | 88.4 |
| Embodiment 5 | 89.5 | 78.76 | 88.6 |
| Embodiment 6 | 71.2 | 64.93 | 91.2 |
| Embodiment 7 | 84.5 | 78.16 | 92.5 |
| Embodiment 8 | 84.3 | 78.74 | 93.4 |
| Embodiment 9 | 84.5 | 79.26 | 93.8 |
| Embodiment 10 | 84.5 | 73.94 | 87.5 |
| Embodiment 11 | 84.4 | 78.07 | 92.5 |
| Embodiment 12 | 84.2 | 77.88 | 92.5 |
| Embodiment 13 | 83.9 | 77.85 | 92.8 |
| Embodiment 14 | 81.3 | 71.71 | 88.2 |
| Embodiment 15 | 81.2 | 73.73 | 90.8 |
| Embodiment 16 | 83.2 | 76.96 | 92.5 |
| Embodiment 17 | 84.1 | 77.46 | 92.1 |
| Embodiment 18 | 85.1 | 78.97 | 92.8 |
| Embodiment 19 | 80.5 | 70.44 | 87.5 |
| Embodiment 20 | 93.5 | 86.11 | 92.1 |
| Embodiment 21 | 84.3 | 77.81 | 92.3 |
| Embodiment 22 | 80.4 | 70.59 | 87.8 |
| Embodiment 23 | 83.5 | 77.24 | 92.5 |
| Embodiment 24 | 81.2 | 71.54 | 88.1 |
| Embodiment 25 | 80.5 | 71.24 | 88.5 |
| Contrast example 1 | 67.0 | 54.40 | 81.2 |
| Contrast example 2 | 80.5 | 67.70 | 84.1 |

From the above descriptions, it may be seen that the above embodiments of the present disclosure achieve the following technical effects:

The present disclosure aims at a problem that the manganese-based cathode electrode material is easily eroded by the electrolyte and a problem of the consumption of the sodium source in the process of forming SEI, the lithium-containing ternary material with the larger capacity is used as the coating layer to coat the sodium ion cathode electrode material. On the one hand, the erosion of the electrolyte to the manganese-based cathode electrode material is reduced by the coating layer, and on the other hand, in the formation process, the lithium source of the lithium-containing ternary material is used as the sacrificial agent to generate a part of SEI, thereby the loss of the active sodium source in the manganese-based cathode electrode material is reduced, and the electrical properties, such as the reversible capacity and the cycle performance, of the sodium ion cathode electrode material are improved.

The above are only preferred embodiments of the present disclosure, and are not intended to limit the present disclosure. For those skilled in the art, the present disclosure may have various modifications and changes. Any modifications, equivalent replacements, improvements and the like made within the spirit and principle of the present disclosure shall be included within a scope of protection of the present disclosure.

## Claims

1. A sodium ion cathode electrode material, wherein the sodium ion cathode electrode material comprises a manganese-based cathode electrode material and a coating layer coated on the manganese-based cathode electrode material, a general chemical formula of the manganese-based cathode electrode material is NaₓMn_{y}M_{1-y}O₂, wherein M is selected from any one of Cu, Fe, Co, and Ni, and 0.5≤x≤1, 0.5≤y≤1, the coating layer is a lithium-containing ternary material, and a general chemical formula of the lithium-containing ternary material is LiNiₐCo_{b}Mn_{c}O₂, 0<a<1, 0<b<1, 0<c<1, and a+b+c=1.

2. The sodium ion cathode electrode material according to claim 1, wherein the coating layer is 5∼20wt% of the manganese-based cathode electrode material, preferably 10∼20wt%, and further preferably 12∼17wt%.

3. The sodium ion cathode electrode material according to claim 1 or 2, wherein the particle diameter of the sodium ion cathode electrode material is 0.2-1 µm.

4. A preparation method for the sodium ion cathode electrode material according to any one of claims 1 to 3, wherein the preparation method comprises:
Step S1, mixing and heating raw materials comprising a manganese-based cathode electrode material, a lithium source, a nickel source, a cobalt source, a manganese source and a complexing agent, to obtain a gel; and
Step S2, in an oxygen-containing atmosphere, sintering the gel, to obtain the sodium ion cathode electrode material.

5. The preparation method according to claim 4, wherein the Step S1 comprises:
Step S11, mixing the raw materials to obtain mixed solution;
Step S12, adjusting a pH value of the mixed solution to obtain a sol; and
Step S13, heating the sol to obtain the gel;
preferably, the pH value is 7-8, the temperature of the heating is preferably 70~90°C, and a mode of the heating is preferably water bath heating,
preferably, the mixing process comprises:
performing first mixing on the manganese-based cathode electrode material, the lithium source, the nickel source, the cobalt source, the manganese source and water, to form first solution;
performing second mixing on the complexing agent and water, to form second solution;
dropwise adding the second solution to the first solution, to obtain the mixed solution; and
preferably, the pH value of the mixed solution is adjusted by ammonia water, preferably the stirring rotation speed of the first mixing is 400-600 r/min, preferably the stirring time of the first mixing is 3-5 h, preferably the stirring rotation speed of the second mixing is 300-500 r/min, and preferably the stirring time of the second mixing is 1-2 h.

6. The preparation method according to claim 4 or 5, wherein in the manganese-based cathode electrode material, the nickel source, the cobalt source, and the manganese source, respectively calculated by a transition metal ion contained in each compound, and in the lithium source, calculated by a lithium ion, the molar ratio of the manganese-based cathode electrode material, the lithium source, the nickel source, the cobalt source, and the manganese source is 23-28:1.6-6.4:0.5-2:0.5-2:0.5-2, preferably 23-28:3.2-6.4:1-2:1-2:1-2, and more preferably 23-28:3.84-5.44:1.2-1.7:1.2-1.7:1.2-1.7; preferably the lithium source is a lithium carbonate and/or a lithium hydroxide, preferably the nickel source is selected from any one or more of a nickel acetate, a nickel sulfate, and a nickel chloride, preferably the cobalt source is selected from any one or more of a cobalt acetate, a cobalt sulfate, and a cobalt chloride, and preferably the manganese source is selected from any one or more of a manganese acetate, a manganese sulfate, and a manganese chloride.

7. The preparation method according to claim 4, wherein calculated by the transition metal ion contained in each component, the total mole number of the nickel source, the cobalt source, and the manganese source is n, the ratio of the mole number of the complexing agent to the n is 1-1.1:1, and preferably the complexing agent is selected from any one or more of a citric acid, a glycolic acid, and an acetic acid.

8. The preparation method according to any one of claims 4 to 7, wherein the temperature of the sintering is 800∼1000°C, preferably the time of the sintering is 10-14 h, and preferably the heating rate of the sintering is 5~10°C/min.

9. The preparation method according to any one of claims 4 to 7, wherein before the sintering, the gel is dried, and the temperature of the drying is 400~450°C, preferably the time of the drying is 4-7 h.

10. A sodium ion battery, comprising a cathode electrode and an anode electrode, and the cathode electrode comprises a cathode electrode material, wherein the cathode electrode material is the sodium ion cathode electrode material according to any one of claims 1 to 9.
